# EUROPEAN PATENT SPECIFICATION

(11) **EP 1 163 144 B1**
(45) Date of publication and mention of the grant of the patent: **04.06.2003**
(21) Application number: 00914374.4
(22) Date of filing: 22.03.2000
(51) Int. Cl.: B62D 33/07

(54) **TILTING DEVICE**
KIPPVORRICHTUNG
DISPOSITIF DE BASCULEMENT

(30) Priority: 23.03.1999 NL 1011648
(43) Date of publication of application: 19.12.2001
(73) Proprietor: Actuant Corporation, Glendale, Wisconsin 53209-3703 (US)
(72) Inventor: OUDELAAR, Tone, NL-7576 CA Oldenzaal (NL)
(74) Representative: Brookhuis, Hendrik Jan Arnold
(86) International application number: NL0000195
(87) International publication number: WO00056591

(56) References cited:
- EP-A- 0 355 345
- WO-A-98/03389
- PATENT ABSTRACTS OF JAPAN vol. 011, no. 247 (M-615), 12 August 1987 (1987-08-12) & JP 62 055278 A (JIDOSHA KIKI CO LTD), 10 March 1987 (1987-03-10)
- PATENT ABSTRACTS OF JAPAN vol. 009, no. 307 (M-435), 4 December 1985 (1985-12-04) & JP 60 143185 A (HINO JIDOSHA KOGYO KK), 29 July 1985 (1985-07-29)

## Description

The present invention relates to a tilting device for causing a first object and a second object, which are pivotably connected to one another at a tilting axis, to pivot with respect to one another, comprising a support which is intended to be fixedly connected to the first object; a lost-motion link which is pivotably connected to the support; a force-exerting means, which is coupled to the lost-motion link, in order to enable a rotary force to be exerted on the lost-motion link; and attachment means which are intended to couple the force-exerting means to the second object, the force-exerting means being able to exert both tensile and compressive forces, by means of which the lost-motion link and the attachment means can be moved with respect to one another.

Tilting devices, in particular tilting devices for causing a vehicle cab, for example a cab of a truck, to tilt are well known.

A tilting device of this nature is known, for example, from JP 62055278 A, disclosing all features of the preamble of claim 1. In the known tilting device, a support, which is provided with a recess and also supports a first bearing axle, is arranged on the base of the cab. A lost-motion link is pivotably coupled, by means of a first end thereof, to the support via the first bearing axle; at its other end, the lost-motion link is pivotably coupled to the free end of a piston rod of a piston/cylinder device via a second bearing axle, the said free end of the piston rod comprising the second bearing axle and also a retaining part. A cylinder body of the piston/cylinder device is pivotably coupled to the chassis. Since the lost-motion link can pivot about the first and second bearing axles, the cab can move freely with respect to the chassis-while the piston/cylinder device is in the retracted position associated with driving the truck.

When the piston/cylinder device is extended from the retracted position associated with driving the truck, the lost-motion link as a result pivots about the first bearing axle, without tilting the cab, towards the cab until the retaining part is situated entirely inside the recess in the support arranged on the base of the cab. In this position, the lost-motion link extends substantially parallel to the base of the cab. If the piston/cylinder device is extended further from this position, it exerts a force, via the support, on the base of the cab, with the result that the cab tilts forwards. In the process, the piston/cylinder device executes a pivoting movement about the second bearing axle with respect to the cab, with the result that the angle between the piston/cylinder device and the base of the cab will change. To prevent the cab from being able to pivot forwards suddenly and/or in an uncontrolled manner, such as for example if the centre of gravity of the cab moves to beyond its tilting axis, the retaining part and the recess in the support are shaped in such a manner that, as a result of the change in angle between the piston/cylinder device and the base of the cab, a locking action is brought about between the said retaining part and the support.

During the tilting movement of the cab, the various components of the lock will execute a sliding movement with respect to one another. When the cab is tilted so far that its centre of gravity is beyond its tilting point, a tensile force will be exerted on the piston/cylinder device, and consequently a tensile force will be exerted on the lock.

In the known tilting device, unlocking is brought about from the locked position through retraction of the piston/cylinder device. In the process, the angle between the piston/cylinder device and the base of the cab changes, and consequently the position of the retaining part changes with respect to the recess in the support arranged on the base of the cab. The unlocking action is brought about when the retaining part can be moved out of the recess as a result of a further retraction of the piston/cylinder device.

A drawback of the known tilting device is that considerable frictional forces occur between the various components of the lock during tilting of the cab, in particular when the centre of gravity of the cab has moved beyond the tilting point. Considerable wear on the components will occur as a result of the frictional forces. These frictional forces limit the maximum permissible change in angle between the piston/cylinder device and the base of the cab.

The object of the invention is to provide a tilting device which brings about a locking action at an early stage of the tilting movement of the cab, the aim being to considerably reduce wear on the components of the lock.

This object is achieved by a tilting device according to claim 1.

When the locking action has been brought about, this means that the forces which are exerted by the force-exerting means during tilting of the cab do not have any influence on the movement of the components of the lock, namely the lost-motion link and the support, with respect to one another. Compared to the known situation, in which the locking action is brought about between the free end of the force-exerting means, which is designed as a piston/cylinder device, and the support arranged on the base of the cab, less friction occurs and it is possible to achieve a greater change in angle between the force-exerting means and the base of the cab.

These and other aspects, characteristics and advantages of the present invention will be explained in more detail by the following description of preferred embodiments of a tilting device according to the invention, with reference to the drawing, in which:
Figure 1 diagrammatically depicts the tilting device as it can be used in a vehicle with a tiltable cab;
Figure 2a shows a longitudinal section through part of a first preferred embodiment of the present invention, in the fully unlocked position;
Figure 2b shows a longitudinal section through the part shown in Figure 2a, in the fully locked position;
Figure 2c shows a longitudinal section through the part shown in Figure 2a, in the just-unlocked position;
Figure 3a shows a cross section through part of a second preferred embodiment of the present invention, in the just-unlocked position;
Figure 3b shows a longitudinal section through the part shown in Figure 3a, in the just-unlocked position;
Figure 3c shows a cross section through the part shown in Figure 3a, in the fully locked position;
Figure 3d shows a longitudinal section through the part shown in Figure 3a, in the fully locked position;
Figure 4a shows a perspective view of part of a third preferred embodiment of the present invention;
Figure 4b shows a longitudinal section through part of the third preferred embodiment of the present invention, in the just-unlocked position;
Figure 4c shows a longitudinal section through the part shown in

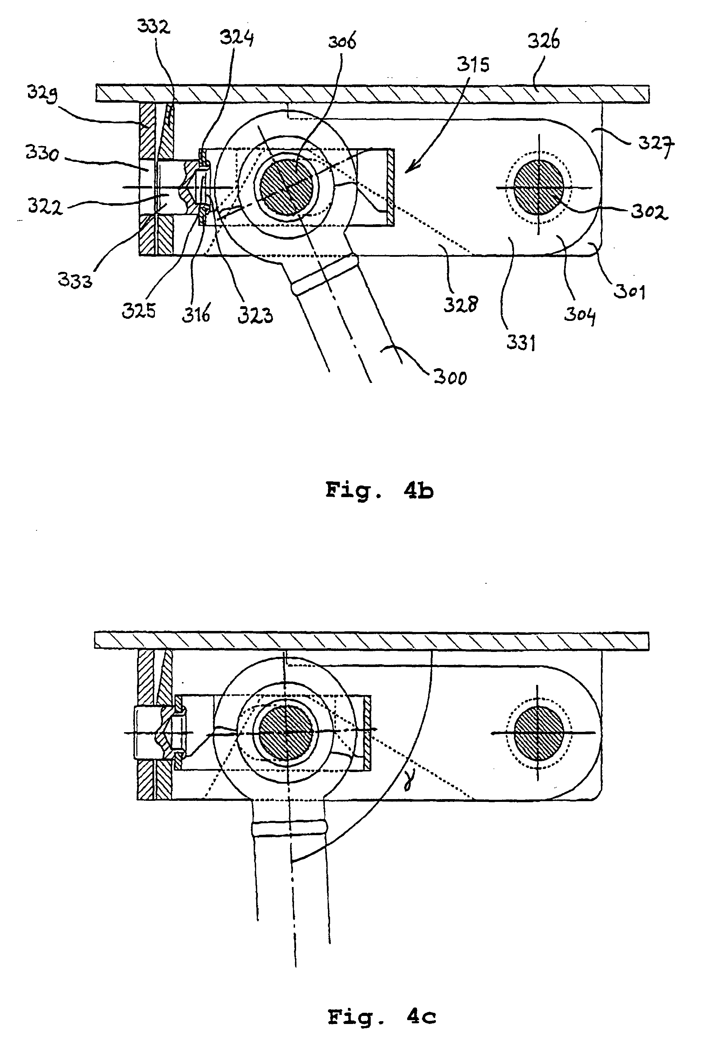

Figure 4b, in the fully locked position.

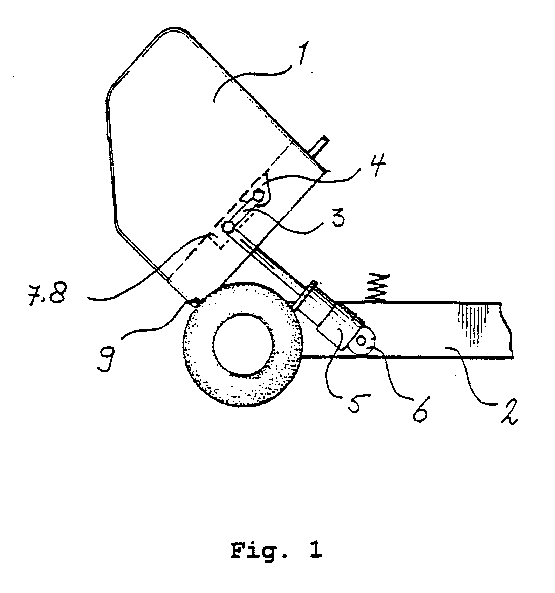

One application of a tilting device will now be explained referring firstly to Figure 1. Figure 1 diagrammatically depicts a vehicle having a chassis 2 and a cab 1 which can tilt with respect to the chassis 2 about a tilting axis 9. A support 4 is attached to the base of the cab 1. A lost-motion link 3 is pivotably attached to the support 4 by means of a first end. A force-exerting means 5, which in the example illustrated is designed as a piston/cylinder device, is pivotably attached to the chassis 2 at a first end 6 of this means and, at its other end, is pivotably attached to the other end of the lost-motion link 3.

To prevent the cab 3 from pivoting forwards undesirably while the cab 2 is being tilted with respect to the chassis 1, it is possible to bring about a locking action between the support 4 and the lost-motion link 3 by means of locking means 7. The locking action can be eliminated again by means of locking means 8, which are actuated by the force-exerting means 5.

Preferred embodiments of the tilting device according to the present invention will be discussed in more detail below, with the chassis 2 and the cab 1 left out for the sake of simplicity. Moreover, since the tilting device according to the present invention can be used wherever two objects are to be tilted with respect to one another, the following text will always use, in a broader sense, the terms "first object" and "second object" instead of "cab" and "chassis".

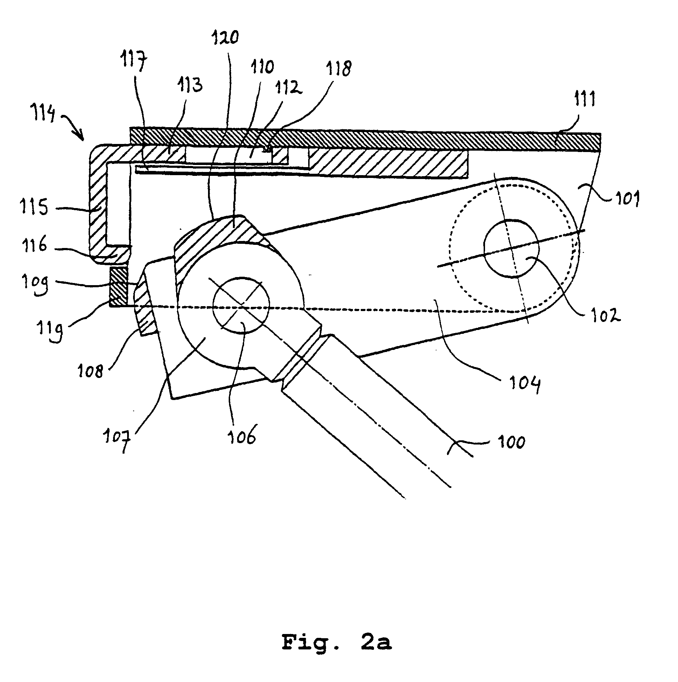

Reference will now be made to Figures 2a to 2c, which show that a first preferred embodiment of the tilting device comprises a support 101 which, by means of plate part 111, can be arranged on a first object (not shown). This support 101 bears a first bearing axle 102 which, in the fitted position, extends parallel to a tilting axis (not shown) of the first object, at a substantially fixed position with respect to the first object. Furthermore, this embodiment of the tilting device comprises a lost-motion link 104 which extends between the first bearing axle 102 and a second bearing axle 106. In this first preferred embodiment of the present invention, the force-exerting means is designed as a piston/cylinder device which comprises a piston rod 100 and a cylinder body (not shown). The second bearing axle 106 pivotably connects the lost-motion link 104 to a piston rod end part 107. Both the first bearing axle 102 and the second bearing axle 106 extend parallel to the tilting axis of the first object, so that the lost-motion link 104 can pivot in a plane which is perpendicular to the tilting axis. In this case, the second bearing axle 106 is located closer than the first bearing axle 102 to the tilting axis of the first object.

A retaining projection 108 is arranged at the free end of the lost-motion link 104. On the side facing towards the first object, the retaining projection 108 is provided with a bevelled section 109.

The piston rod end part 107 is also provided with a rolling cam 110 which, by means of a rolling surface 120, can come into contact with the plate part 111. When the first object is to be tilted and the piston rod 100 is extended with respect to the cylinder body of the piston/cylinder device, the lost-motion link 104 executes a pivoting movement about the first bearing axle 102 without, in the process, tilting the first object until the rolling surface 120 comes into contact with the plate part 111. In the process, the rolling cam 110 latches into a recess 112 which is arranged in a base part 113 of a J-shaped locking hook 114. This locking hook 114 furthermore comprises an intermediate part 115 which at one end is positioned at right angles to an end of the base part 113, and an end part 116 which is positioned at right angles to the other end of the intermediate part 115 and consequently extends substantially parallel to the base part 113. The length of the end part 116 is shorter than the length of the base part 113 and is adapted to the height of the retaining projection 108 in the longitudinal direction of the lost-motion link 104. The base part 113 is situated between a guide arm 117 and the plate part 111, which extend substantially parallel to one another, and can be displaced in the longitudinal direction of the lost-motion link 104. An elevated section on the plate part 111 forms a stop 118, which prevents the base part 113 from being able to slide out of the space between the guide arm 117 and the plate part 111 altogether. The locking hook 114 is therefore positioned in such a manner that the stop 118 is situated in the recess 112 in the base part 113.

The end part 116 of the locking hook 114 is supported by a rectangular support element 119 which is arranged on the support 101. When the base part 113 is displaced, the end part 116 is displaced over the support element 119. In the fully unlocked position, the base part 113 bears against the stop 118.

The first preferred embodiment of the tilting device according to the present invention as described above can be locked, during tilting of the first object, by the lost-motion link 104, arranged between the two bearing axles 102, 106, being coupled to the support 101 arranged on the first object.

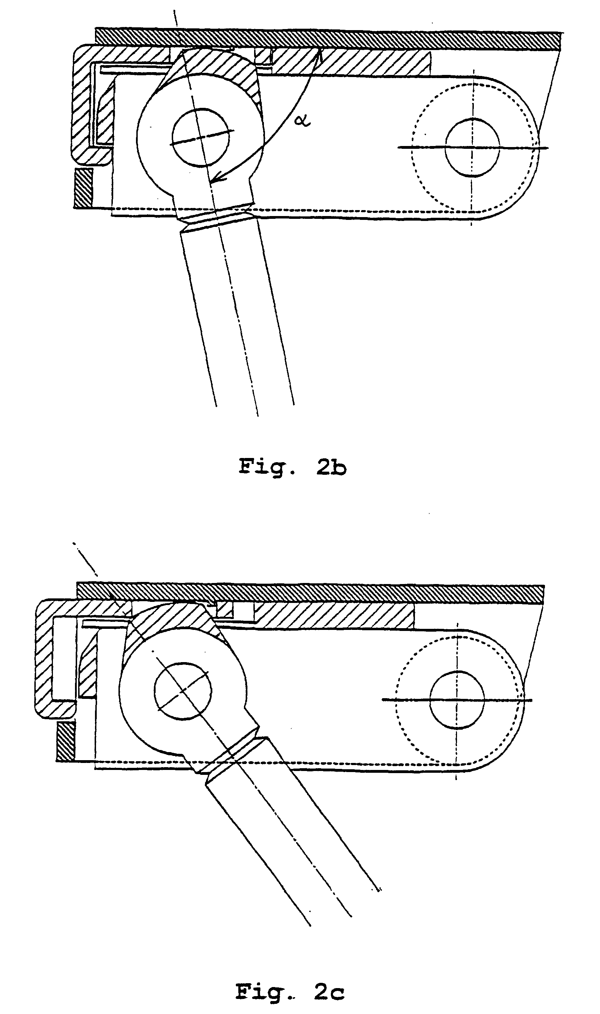

The fully unlocked position is shown in Figure 2a. In this position, movements of the piston/cylinder device are not transmitted to the first object. In order for the first object to be tilted out of this position, the piston rod 100 is extended with respect to the cylinder body of the piston/cylinder device. In the process, the lost-motion link 104 executes a pivoting movement about the first bearing axle 102. In the unlocked position, the base part 113 of the locking hook 114 bears against the stop 118 on the plate part 111, so that the lost-motion link 104 can be moved into a position parallel to the plate part 111 without hindrance. In this position, the rolling cam 110 latches into the recess 112 in the base part 113 and, by way of the rolling surface 120, comes into contact with the plate part 111. When the piston rod 100 is then extended further, the first object will begin to execute a tilting movement about the tilting axis. In the process, the angle between the piston/cylinder device and the plate part 111 which is arranged on the first object increases. This angle is denoted by α in Figure 2b. The fully locked position as shown in Figure 2b is reached, from the just-unlocked position as shown in Figure 2c, as a result of the piston rod 100 extending with respect to the cylinder body by a distance which is such that the angle α increases by approximately 25 degrees. The rolling cam 110 is shaped in such a way that it is able, by means of the rolling surface 120, to roll along the surface of the plate part 111. In the process, the rolling cam 110 also comes into contact with the base part 113 of the locking hook 114 and forces the locking hook 114 to move in the direction of the first bearing axle 102, substantially parallel to the plate part 111. In the process, the retaining projection 108 on the lost-motion link 104 is surrounded by the locking hook 114, and the tilting device is moved into the fully locked position, in which the piston/cylinder device and the first object cannot move independently of one another. This is because if the piston rod 100 is extended further with respect to the cylinder body of the piston/cylinder device, the lost-motion link 104 and consequently the second bearing axle 106 remain in a substantially fixed position with respect to the first object. In this exemplary embodiment, in the fully locked position the end part 116 of the locking hook 114 is subjected to a shear load, as a result of the forces which are generated and the respective positions of the retaining projection 108, the end part 116 and the support element 119.

From the fully locked position, the tilting device can be moved into the unlocked position as a result of the piston rod 100 being retracted with respect to the cylinder body of the piston/cylinder device. This movement reduces the angle α. By way of the rolling surface 120, the rolling cam 110 rolls along the surface of the plate part 111 and comes into contact with the base part 113 of the locking hook 114. In this situation, the locking hook 114 is forced to move by the rolling cam 110, until the base part 113 moves against the stop 118 on the plate part 111. The tilting device is then in the just-unlocked position, which changes into the fully unlocked position as a result of the piston rod 100 being retracted further.

In the first preferred embodiment of the present invention, the locking action is brought about at an early stage of the tilting movement of the first object. When the angle α has increased by approximately 25 degrees with respect to the just-unlocked position, as a result of the piston rod 100 being extended, the locking action is already complete. In the process, at most slight wear has occurred to the force-transmitting surfaces, substantially due to the shape of the rolling surface 120.

In the preferred embodiment of the present invention which is illustrated, the base part 113 of the locking hook 114 is situated between the guide arm 117 and the plate part 111. The retaining projection 108 is arranged at the free end of the lost-motion link 104. However, it will be clear to a person skilled in the art that the scope of the present invention is not limited to the examples discussed above, but rather various alterations and modifications are possible without departing from the scope of the invention as defined in the appended claims. For example, in an embodiment in which the locking hook 114 is arranged at the free end of the lost-motion link 104 and the retaining projection 108 is arranged on the support 101, the tilting device could function in a similar manner to in the exemplary embodiment shown.

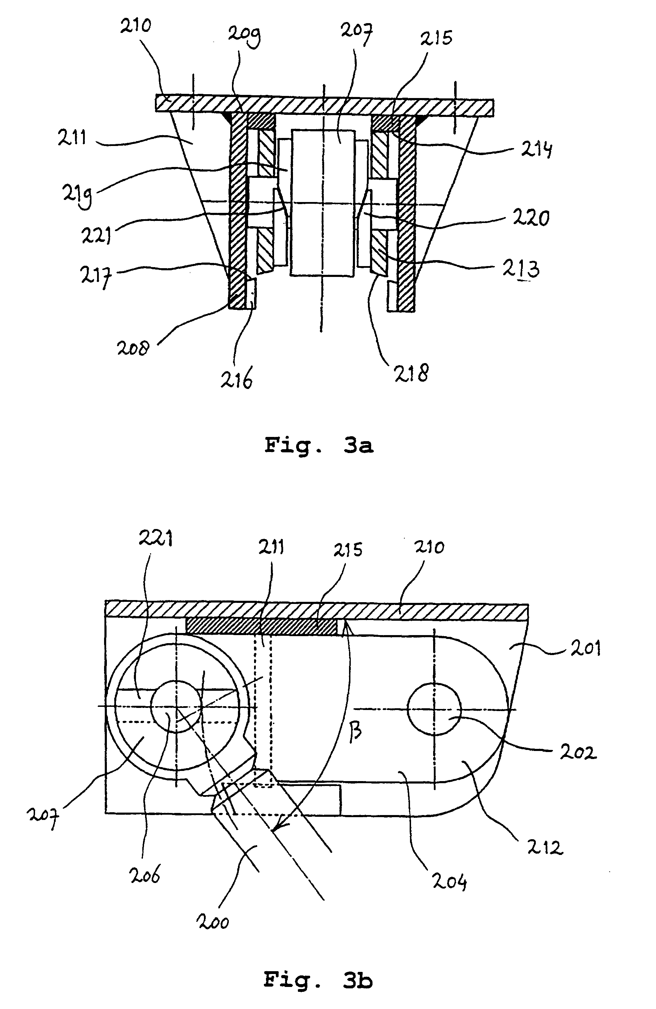

Figures 3a and 3b show part of a tilting device according to a second preferred embodiment of the invention, in the just-unlocked position. The tilting device comprises a substantially U-shaped support 201 with two plate-like side parts 208, which are parallel to one another and, by means of a long side 209, are attached to a third plate-like part 210 by welding or a similar joining method. The plate part 210 extends substantially parallel to the first object and is attached thereto. The support 201 also comprises two transverse supports 211 which are positioned at right angles to both the two plate-like side parts 208 and the plate-like part 210.

In both side parts 208 there is a passage hole for accommodating a first bearing axle 202. In the assembled position, the first bearing axle 202 extends between the two passage holes, parallel to the tilting axis, which is indicated in Figure 1 by the reference numeral 9. At a first end 212, a lost-motion link 204 is rotatably connected, via the first bearing axle 202, to the support 201 and, at an opposite second end is rotatably connected, via a second bearing axle 206, to a free end 207 of a force-exerting means. In this exemplary embodiment, the force-exerting means is designed as a piston/cylinder device having a piston rod 200, and the free end 207 is therefore referred to below as piston rod end part 207. The lost-motion link 204 is composed of two identical web parts 213 which are parallel to one another, the piston rod end part 207 being positioned between those sides of the web parts 213 which face towards one another.

Like the first bearing axle 202, the second bearing axle 206 extends parallel to the tilting axis, so that the lost-motion link 204 can pivot in a plane which is perpendicular to the tilting axis.

The support 201 comprises two stop faces 214, which form part of two separate stop blocks 215 which are arranged on that side of the plate parts 210 which faces towards the interior of the support 201 and bear against those sides of the side parts 208 which face towards one another. The stop blocks 215 are preferably prism-shaped and preferably extend substantially parallel to one another, in the longitudinal direction of the lost-motion link 204. Those sides of the two plate-like web parts 213 of the lost-motion link 204 which face towards the plate part 210 function as stop faces which are able to interact with the stop faces 214.

When the piston rod 200 is extended from the position associated with the driving position, the lost-motion link 204 executes a pivoting movement about the bearing axle 202 without, in the process, tilting the first object until the stop faces of the web parts 213 and the stop faces 214 come to bear against one another. Precisely this state of the locking action of the tilting device is shown in Figures 3a and 3b, this position being referred to as the just-unlocked position of the tilting device.

If the piston rod 200 is then extended further, the first object will begin a tilting movement about the tilting axis. In the process, the angle between the piston rod 200 and the plate part 210, which in Figure 3b is denoted by β, increases.

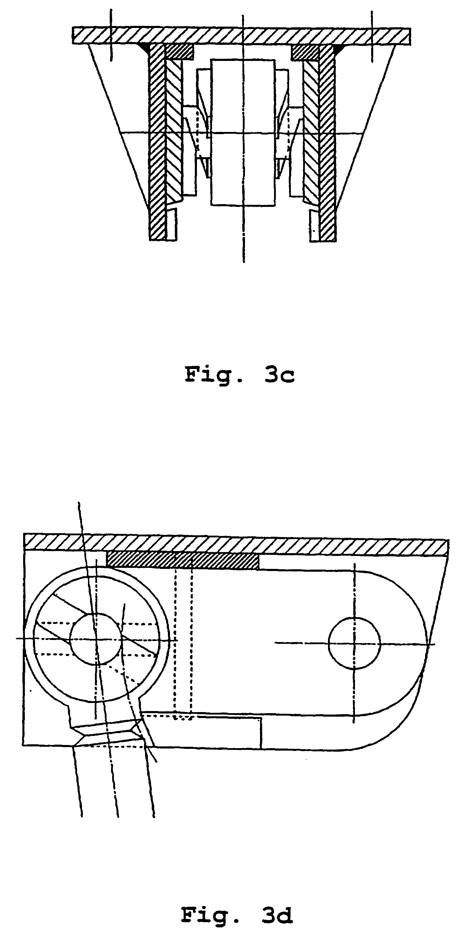

The tilting of the first object often has to take place in such a manner that its centre of gravity tilts over so far that it comes to lie beyond the tilting axis. If the centre of gravity moves to vertically above the tilting axis, there is a risk of the first object tilting further in an uncontrolled manner and consequently causing a dangerous and undesired situation. This undesired situation can be avoided by locking the tilting device. This locking action is substantially brought about by coupling the support 201 arranged on the first object to the lost-motion link 204. If the centre of gravity of the first object then moves beyond the tilting axis, the first object will exert a tensile force on the piston/cylinder device and consequently its tilting movement will be impeded. The tilting movement can then be continued in a safe and controlled manner, if desired. The coupled position of the support 201 and the lost-motion link 204 in the outermost extended position of the piston rod 200 is shown in Figures 3c and 3d. The locking action has been fully implemented when the angle β has increased by approximately 30 degrees compared to the just unlocked position.

In this preferred embodiment of the present invention, the coupling of the lost-motion link 204 to the support 201 arranged on the first object is brought about as a result of the lost-motion link 204 being retained in a suitable manner, in particular as a result of the web parts 213 being retained in a suitable manner in the interior of the support 201, which is formed by the space lying between the side parts 208.

Opposite the stop blocks 215, at the free ends of the side parts 208, there are two locking projections 216, which each separately comprise a support face 217 on their side facing towards the plate part 210. The support faces 217 are designed to slope, the inclination increasing in the direction from the side part 208 towards the interior of the support 201. On their side which is directed away from the plate part, the web parts 213 comprise a support face 218 with an inclination which corresponds to the inclination of the support faces 217. When, starting from the position of the tilting device shown in Figures 3a and 3b, the web parts 213 are moved in the direction of the side parts 208, the web parts 213 will come to bear against the side parts 208, and the web parts 213 will be enclosed between the stop blocks 215 and the locking projections 216, as shown in Figures 3c and 3d.

The two web parts 213 of the lost-motion link 204 are moved apart by the change which is brought about in the angle β during the extension of the piston rod 200. For this purpose, a slide part 219, which can interact with a corresponding slide part 220 on the web part 213, is arranged on either side of the piston rod end part 207 located between the two web parts 213. Together, the slide parts 219, 220 form an adjustment means and each comprise a slide face 221 on the side facing towards one another.

In the position of the tilting device shown in Figures 3a and 3b, the slide parts 219, 220 bear against one another on their corresponding slide faces 221.

The slide faces 221 preferably have oppositely directed helical inclinations, so that the corresponding slide parts 219, 220 lie substantially in line with one another in the position of the tilting device shown in Figures 3a and 3b. If, as a result of the above-mentioned change in angle, in particular an increase in the angle, the corresponding slide parts 219, 220-move away from one another as a result of the helical shape of the inclination, they exert a force on the web parts 213 of the lost-motion link 204. This force presses the web parts 213 apart, so that they come to bear against the side parts 208, with the result that the desired locking action is brought about. The locked position is shown in Figures 3c and 3d. To unlock the tilting device, the piston rod 200 is retracted, during which process the web parts 213 will move towards one another.

It will be clear to a person skilled in the art that the scope of the present invention is not limited to the examples discussed above, but rather numerous alterations and modifications are possible without departing from the scope of the invention as defined in the appended claims.

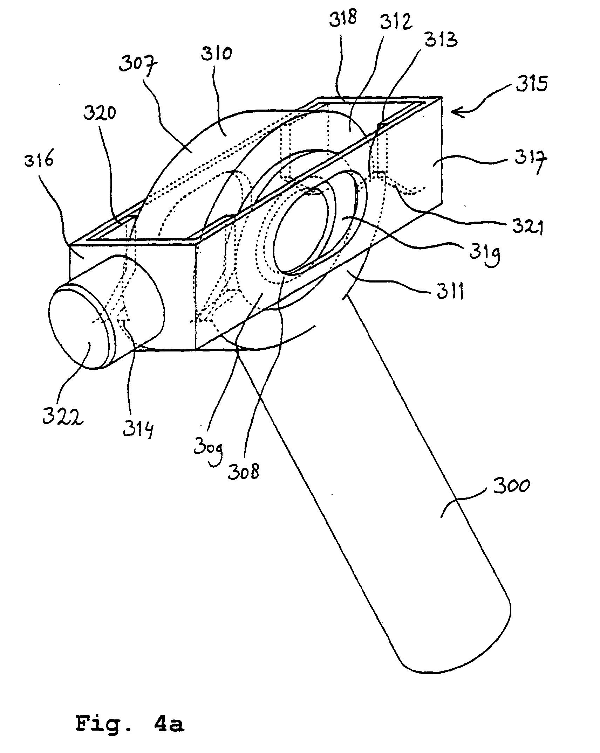

Figure 4a shows part of a third preferred embodiment of the present invention. A piston rod 300 of a piston/cylinder device has a free end 307, referred to below as piston rod end part 307. The piston rod end part 307 comprises a first cylindrical section 308, a second cylindrical section 309 and a third cylindrical section 310. The three cylindrical sections 308, 309, 310 are arranged concentrically with respect to one another, an outer surface of the first cylindrical section 308 adjoining an inner surface of the second cylindrical section 309, and an outer surface of the second cylindrical section 309 adjoining an inner surface of the third cylindrical section 310. The third cylindrical section 310 is provided on either side with a first section 311 and a second section 312 which is recessed in the axial direction, the first section 311 being located on the side of the piston rod 300. The transitions between the first sections 311 and the second sections 312 are formed by four surfaces 313. In this exemplary embodiment, the surfaces 313 are rectangular. A short side of each surface 313 is an edge which forms the transition between the outer surface of the third cylindrical section 310 and the surface 313, and is denoted by the reference numeral 314.

The piston rod end part 307 is partially surrounded by a locking slide 315, which in this exemplary embodiment has a rectangular periphery. The locking slide 315 comprises a front wall 316, two side walls 317 and a rear wall 318, and in this example the front wall 316 and the rear wall 318 form the short sides of the rectangle, while the side walls 317 form the long sides of the rectangle. In the side walls 317, there is an oval slot 319. The piston rod end part 307 and the locking slide 315 are connected to one another by means of a bearing axle, which is not shown in Figure 4a and is fitted through the slots 319 and the piston rod end part 307, the bearing axle adjoining an inner surface of the first cylindrical section 308.

The locking slide 315 comprises four plate-like projections 320, each projection 320 being arranged in a corner of the locking slide 315 and extending in the direction of the side walls 317. Each projection 320 is provided with a bevelled section 321.

On the front wall 316, there is a retaining cylinder 322 which extends from the front wall 316, two projections 320 being situated on one side of the front wall 316, and the retaining cylinder 322 being situated on the other side of the front wall 316.

Figure 4b shows how, in this exemplary embodiment, the retaining cylinder 322 is attached to the locking slide 315. The retaining cylinder 322 is provided with a bore 323, while the retaining cylinder 322 is provided, over a section of the axial length of the bore 323, with an annular groove 324. The axial width of the groove 324 is at least equal to the wall thickness of the front wall 316. In the front wall 316, there is a hole 325 for accommodating the retaining cylinder 322, the diameter of the hole 325 being at least equal to the diameter of the retaining cylinder 322 at the level of the groove 324. The diameter of the bore 323 and the radial depth of the groove 324 are selected in such a manner that a narrow ring of cylinder material surrounds the bore 323 at the level of the groove 324. A snap connection is brought about between the above-described retaining cylinder 322 and the locking slide 315, a section of the front wall 316 around the hole being situated in the groove 324.

Figure 4b also shows the relationship between the piston rod 300 and the locking slide 315 and a number of other components of the tilting device. The tilting device comprises a support 301, which is attached, by means of a plate part 326, to a first object (not shown). The support 301 comprises two substantially parallel long side walls 327, which are positioned substantially at right angles to the plate part 326 and are both provided with a recess 328. The support 301 also comprises a partition 329, which is likewise positioned substantially at right angles to the plate part 326 and adjoins the side walls 327 in such a manner that the side walls 327 and the partition 328 together form a U-shaped unit. In the partition 328, there is a hole 330, the diameter of which is at least equal to the diameter of the retaining cylinder 322. In both side walls 327 there is a hole, in which a first bearing axle 302, which extends parallel to a tilting axis (not shown) of the first object, is arranged.

A lost-motion link 304 is connected to the support 301 by means of the first bearing axle 302. In this exemplary embodiment, the lost-motion link comprises two side walls 331 and a partition 332, which together form a U-shaped assembly, in a similar manner to the corresponding components of the support 301. In this exemplary embodiment, the dimensions of the lost-motion link 304 are selected in such a manner, with respect to the dimensions of the support 301, that the U-shape of the lost-motion link 304 can be surrounded by the U-shape of the support 301. In both side walls 331, there is a hole in which a second bearing axle 306 is arranged, which extends substantially parallel to the first bearing axle 302 and connects the lost-motion link 304 to the piston rod 300. In this case, a section of the piston rod end part 307 with the locking slide 315 is surrounded by the lost-motion link 304. The second bearing axle 302 extends through the first cylindrical section 308 of the piston rod end part 307, the slots 319 in the side walls 317 of the locking slide 315 and the holes in the side walls 331 of the lost-motion link 304. In the partition 332 of the lost-motion link 304, there is a hole 333, the diameter of which is at least equal to the diameter of the retaining cylinder 322.

During the tilting of the first object (not shown), the above-described tilting device can be locked as a result of the lost-motion link 304 being coupled to the first object via the support 301.

The just-unlocked position is shown in Figure 4b. In this position, the lost-motion link 304 bears, by way of elevated sections of the side walls 331, against the plate part 326 and, in this arrangement, is situated in a position parallel to the plate part 326. The holes 330, 333 in the partitions 328, 332 of the support 301 and the lost-motion link 304, respectively, are in this case coaxial with respect to one another. To move from this position into the locked position, the piston rod 300 is extended further with respect to a cylinder body (not shown) of the piston/cylinder device. The first object will then begin a tilting movement about the tilting axis. During this movement, the angle between the piston rod 300 and the plate part 326 arranged on the first object increases. The said angle between the piston rod 300 and the plate part 326 is denoted by γ in Figure 4c. As a result of the change in angle, on either side of the piston rod end part 307 the surface 313 comes to bear, by means of the edge 314, against the bevelled section 321 of the projection 320 located at the front wall 316. As the piston rod 300 rotates further with respect to the plate part 326, the surface 313, by way of the edge 314, slides over the bevelled section 321 of the projection 320, with the result that the locking slide 315 is moved in the direction of the partition 332 of the lost-motion link 304. In the process, the second bearing axle 306 slides in the slots 319. The tilting device has moved into the fully locked position when the retaining cylinder 322 extends through the holes 330, 333 in the partitions 328, 332 of the support 301 and the lost-motion link 304, respectively. The fully locked position is shown in Figure 4c. In this position, it is possible to speak of the lost-motion link 304 being coupled to the first object via the support 301. In this exemplary embodiment, the locking action has been fully implemented when the angle γ has increased by approximately 23 degrees. This is at an early stage of the tilting movement of the first object, at any rate before the first object tilts beyond its centre of gravity and, as a result, tensile forces are exerted on the lock. In the fully locked position, the retaining cylinder 322 is subjected to shear loads. In this position, further rotation of the piston rod end part 307 as a result of extension of the piston rod 300 with respect to the cylinder body has no influence on the position of the lost-motion link 304 with respect to the support 301 and the first object. However, if the piston rod end part 307 is rotated out of this position as a result of the piston rod 300 being retracted, and consequently the angle γ decreases again, the surface 313, on either side of the piston rod end part 307, comes to bear against the bevelled section 321 of the projection 320 situated at the rear wall 318, by way of the edge 314. When the piston rod 300 rotates further with respect to the plate part 326, the surface 313 slides over the bevelled section 321 of the projection 320 by means of the edge 314, with the result that the locking slide 315 is moved towards the first bearing axle 302. In the process, the second bearing axle 306 slides in the slots 319. The tilting device has moved into the just-unlocked position when the retaining cylinder 322 extends only through the hole 333 in the partition 332 of the lost-motion link 304. At that moment, the lost-motion link 304 can move with respect to the support 301 and the locking action has been eliminated.

It will be clear to a person skilled in the art that the scope of the present invention is not limited to the examples discussed above, but rather various alterations and modifications are possible without departing from the scope of the invention as defined in the appended claims. For example, the dimensions of the support 301 and of the lost-motion link 304 may be selected in such a manner that the U-shape of the support 301 can be surrounded by the U-shape of the lost-motion link 304.

## Claims

1. Tilting device for causing a first object (1) and a second object (2), which are pivotably connected to one another at a tilting axis (9), to pivot with respect to one another, comprising:
a support (4) which is intended to be fixedly connected to the first object (1);
a lost-motion link (3) which is pivotably connected to the support (4);
a force-exerting means (5), which is coupled to the lost-motion link (3), in order to enable a rotary force to be exerted on the lost-motion link (3);
and attachment means (6) which are intended to couple the force-exerting means (5) to the second object (2), the force-exerting means (5) being able to exert both tensile and compressive forces, by means of which the lost-motion link (3) and the attachment means (6) can be moved with respect to one another;
locking means (7) which are able to bring about a locking action for fixing the position of the lost-motion link (3) with respect to the support (4) during pivoting of the first object with respect to the second object,
said locking means comprising a locking component (115; 216; 330) arranged on said support and a further locking component (108; 213; 322) cooperating therewith, which locking components are moveable with respect to each other and can assume an unlocked and a fully locked position, which fully locked position is reached in an early stage of the pivoting of the first object with respect to the second object,
and unlocking means (8; 110; 219; 313) which are able to eliminate the above-mentioned locking action, which unlocking means (8; 110; 219; 313) are actuated by the said force-exerting means (5),
**characterized in that** said further locking component (108; 213; 322) of the locking means is arranged on the lost-motion link, so that a locking action is brought about between the support (4) and the lost-motion link (3), and **in that** said locking means are designed such that after said fully locked position has been reached the locking components remain stationairy with respect to each other during the further pivoting of the first object with respect to the second object.

2. Tilting device according to claim 1, **characterized in that** the force-exerting means (5) is designed as a piston/cylinder device which comprises a piston rod (100, 200, 300) and a cylinder body.

3. Tilting device according to claim 1 or 2, **characterized in that** the support (4, 101) comprises a moveable J-shaped locking hook (114) which, in the locked position of the tilting device, engages on a retaining projection (108) arranged on the lost-motion link (3, 104).

4. Tilting device according to one or more of the preceding claims, **characterized in that** the piston rod (100) comprises, at its end, a rolling cam (110) which, in the event of a movement of the piston rod (100) in the locked position of the tilting device, displaces the locking hook (114), with the result that the locking action between the support (4, 101) and the lost-motion link (3, 104) can be eliminated.

5. Tilting device according to claim 1 or 2, **characterized in that** the support (4, 201) is substantially U-shaped and comprises an internal space, which is delimited by two substantially parallel side parts (208) and can accommodate the lost-motion link (3, 204).

6. Tilting device according to claim 5, **characterized in that** the lost-motion link (3, 204) comprises at least two substantially parallel, plate-like web parts (213).

7. Tilting device according to claim 6, **characterized in that** the web parts (213) of the lost-motion link (3, 204) can move towards and away from one another.

8. Tilting device according to one or more of the preceding claims, **characterized in that** the piston rod (200) comprises, at its end, a first slide part (219) which is able to interact with a second slide part (220) arranged on the lost-motion link (3, 204), which slide parts (219, 220) form an adjustment means, which adjustment means is able to displace the web parts (213) of the lost-motion link (3, 204).

9. Tilting device according to one or more of the preceding claims, **characterized in that** the slide parts (219, 220) comprise a slide face (221), which slide face (221) forms a helical inclination.

10. Tilting device according to one or more of the preceding claims, **characterized in that** the support (4, 201) comprises locking projections (216) which, in the locked position of the tilting device, support the web parts (213) of the lost-motion link (3, 204).

11. Tilting device according to claim 1 or 2, **characterized by** a retaining member (322) which, in the locked position, extends through both a hole (330) in the support (4, 301) and a hole (333) in the lost-motion link (3, 304).

12. Tilting device according to claim 11, **characterized in that** the retaining member (322) is arranged on a locking slide (315) which can be displaced by a movement of the piston rod (300), with the result that the locking action between the support (4, 301) and the lost-motion link (3, 304) can be brought about or can be eliminated.

13. Tilting device according to claim 12, **characterized in that** the piston rod (300) is provided, at its end, with surfaces (313) having edges (314) which are able to interact with projections (320) which are arranged on the locking slide (315).

14. Vehicle with a chassis (2) and a tiltable cab (1), provided with a tilting device according to any one of the preceding claims, which is coupled between the cab and the chassis.

## Patentansprüche

1. Kippvorrichtung zum Drehen eines ersten Objekts (1) und eines zweiten Objekts (2), die an einer Kippachse (9) drehbar miteinander verbunden sind, relativ zueinander, umfassend:
einen Träger (4), der dazu ausgelegt ist, fest am ersten Objekt (1) befestigt zu sein;
eine Spielverbindung (3), die drehbar mit dem Träger (4) verbunden ist;
eine Kraftausübungseinrichtung (5), die mit der Spielverbindung (3) gekoppelt ist, um zu ermöglichen, daß eine Rotationskraft auf die Spielverbindung (3) ausgeübt wird;
und eine Befestigungseinrichtung (6), die dazu ausgelegt ist, die Kraftausübungseinrichtung (5) mit dem zweiten Objekt (2) zu koppeln, wobei die Kraftausübungseinrichtung (5) dazu ausgelegt ist, sowohl Zugals auch Druckkräfte auszuüben, wodurch die Spielverbindung (3) und die Befestigungseinrichtung (6) relativ zueinander bewegt werden können;
eine Verriegelungseinrichtung (7), die dazu ausgelegt ist, eine Verriegelungswirkung zu erzielen, um die Position der Spielverbindung (3) relativ zum Träger (4) während des Drehens des ersten Objekts relativ zum zweiten Objekt festzuhalten,
wobei die Verriegelungseinrichtung eine am Träger angebrachte Verriegelungskomponente (115; 216; 330) sowie eine weitere damit zusammenwirkende Verriegelungskomponente (108; 213, 322) umfaßt, welche Verriegelungskomponenten relativ zueinander bewegbar sind und eine entriegelte sowie eine vollständig verriegelte Position einnehmen können, welche vollständig verriegelte Position in einer frühen Phase des Drehens des ersten Objekts relativ zum zweiten Objekt erreicht wird,
und eine Entriegelungseinrichtung (8; 110; 219; 313), die dazu ausgelegt ist, die obige Verriegelungswirkung zu beseitigen, welche Entriegelungseinrichtung (8; 110; 219, 313) durch die Kraftausübungseinrichtung (5) betätigt wird,
**dadurch gekennzeichnet, daß** die weitere Verriegelungskomponente (108; 213; 322) der Verriegelungseinrichtung an der Spielverbindung angebracht ist, so daß eine Verriegelungswirkung zwischen dem Träger (4) und der Spielverbindung (3) bewirkt wird, und daß die Verriegelungseinrichtung derart gebildet ist, daß nachdem die vollständig verriegelte Position erreicht ist, die Verriegelungskomponenten während des weiteren Drehens des ersten Objekts relativ zum zweiten Objekt relativ zueinander stationär bleiben.

2. Kippvorrichtung nach Anspruch 1, **dadurch gekennzeichnet, daß** die Kraftausübungseinrichtung (5) als eine Kolben-/Zylindervorrichtung gebildet ist, die eine Kolbenstange (100, 200, 300) sowie einen Zylinderkörper umfaßt.

3. Kippvorrichtung nach Anspruch 1 oder 2, **dadurch gekennzeichnet, daß** der Träger (4, 101) einen bewegbaren J-förmigen Verriegelungshaken (114) umfaßt, der in der verriegelten Position der Kippvorrichtung an einem an der Spielverbindung (3, 104) angebrachten Haltevorsprung (108) angreift,

4. Kippvorrichtung nach einem oder mehreren der vorhergehenden Ansprüche, **dadurch gekennzeichnet, daß** die Kolbenstange (100) an ihrem Ende einen Rollnocken (110) umfaßt, der im Fall einer Bewegung der Kolbenstange (100) in die verriegelte Position der Kippvorrichtung den Verriegelungshaken (114) verlagert, mit der Folge, daß die Verriegelungswirkung zwischen dem Träger (4, 101) und der Spielverbindung (3, 104) beseitigt werden kann.

5. Kippvorrichtung nach Anspruch 1 oder 2, **dadurch gekennzeichnet, daß** der Träger (4, 201) im wesentlichen U-förmig ist und einen Innenraum umfaßt, der durch zwei im wesentlichen parallele Seitenteile (208) begrenzt ist und die Spielverbindung (3, 204) aufnehmen kann.

6. Kippvorrichtung nach Anspruch 5, **dadurch gekennzeichnet, daß** die Spielverbindung (3, 204) wenigstens zwei im wesentlichen parallele, plattenförmige Stegteile (213) umfaßt.

7. Kippvorrichtung nach Anspruch 6, **dadurch gekennzeichnet, daß** sich die Stegteile (213) der Spielverbindung (3, 204) auf einander zu und von einander weg bewegen können.

8. Kippvorrichtung nach einem oder mehreren der vorhergehenden Ansprüche, **dadurch gekennzeichnet, daß** die Kolbenstange (200) an ihrem Ende ein erstes Gleitteil (219) umfaßt, welches dazu ausgelegt ist, mit einem an der Spielverbindung (3, 204) angebrachten zweiten Gleitteil (220) zu wechselwirken, welche Gleitteile (219, 220) eine Einstelleinrichtung bilden, welche Einstelleinrichtung dazu ausgelegt ist, die Stegteile (213) der Spielverbindung (3, 204) zu verlagern.

9. Kippvorrichtung nach einem oder mehreren der vorhergehenden Ansprüche, **dadurch gekennzeichnet, daß** die Gleitteile (219, 220) eine Gleitfläche (221) umfassen, welche Gleitfläche (221) eine schraubenförmige Neigung bildet.

10. Kippvorrichtung nach einem oder mehreren der vorhergehenden Ansprüche, **dadurch gekennzeichnet, daß** der Träger (4, 201) Verriegelungsvorsprünge (216) umfaßt, die in der verriegelten Position der Kippvorrichtung die Stegteile (213) der Spielverbindung (3, 204) tragen.

11. Kippvorrichtung nach Anspruch 1 oder 2, **gekennzeichnet durch** ein Halteelement (322), welches sich in der verriegelten Position sowohl **durch** ein Loch (330) im Träger (4, 301) als auch ein Loch (333) in der Spielverbindung (3, 204) erstreckt.

12. Kippvorrichtung nach Anspruch 11, **dadurch gekennzeichnet, daß** das Halteelement (322) an einem Verriegelungsschieber (315) angebracht ist, der durch eine Bewegung der Kolbenstange (300) verlagert werden kann, mit der Folge, daß die Verriegelungswirkung zwischen dem Träger (4, 301) und der Spielverbindung (3, 304) bewirkt oder beseitigt werden kann.

13. Kippvorrichtung nach Anspruch 12, **dadurch gekennzeichnet, daß** die Kolbenstange (300) an ihrem Ende mit Oberflächen (313) versehen ist, die Kanten (314) aufweisen, welche dazu ausgelegt sind, mit Vorsprüngen (320) zu wechselwirken, die am Verriegelungsschieber (315) angebracht sind.

14. Fahrzeug mit einem Rahmen (2) und einer kippbaren Kabine (1), ausgestattet mit einer Kippvorrichtung nach einem der vorhergehenden Ansprüche, die zwischen der Kabine und dem Rahmen angeschlossen ist.

## Revendications

1. Dispositif de basculement pour amener un premier objet (1) et un second objet (2), qui sont reliés pivotants l'un à l'autre au niveau d'un axe (9) de basculement, à pivoter l'un par rapport à l'autre, comprenant :
un support (4) qui est conçu pour liaison fixe au premier objet (1) ;
une liaison à course morte (3) qui est reliée pivotante au support (4) ;
un moyen (5) d'application de force, qui est couplé à la liaison à course morte (3), afin de permettre d'exercer une force de rotation sur la liaison à course morte (3) ;
et des moyens (6) de fixation qui sont prévus pour accoupler le moyen (5) d'application de force au second objet (2), le moyen (5) d'application de force pouvant exercer des forces à la fois de traction et de compression, au moyen desquelles la liaison à course morte (3) et les moyens (6) de fixation peuvent bouger l'un par rapport à l'autre ;
des moyens (7) de verrouillage qui peuvent provoquer une action de verrouillage dans le but de fixer la position de la liaison à course morte (3) par rapport au support (4) pendant le pivotement du premier objet par rapport au second objet,
lesdits moyens de verrouillage comprenant un composant (115 ; 216 ; 330) de verrouillage agencé sur ledit support et un composant supplémentaire (108 ; 213 ; 322) de verrouillage coopérant avec celui-ci, lesquels composants de verrouillage sont mobiles les uns par rapport aux autres et peuvent prendre une position déverrouillée et une position complètement verrouillée, laquelle position complètement verrouillée est obtenue dans une précédente phase du pivotement du premier objet par rapport au second objet,
et des moyens (8 ; 110 ; 219 ; 313) de déverrouillage qui peuvent éliminer l'action de verrouillage mentionnée ci-dessus, lesquels moyens (8 ; 110 ; 219 ; 313) de déverrouillage sont actionnés par ledit moyen (5) d'application de force ;
**caractérisé en ce que** ledit composant supplémentaire (108 ; 213 ; 322) de verrouillage des moyens de verrouillage est agencé sur la liaison à course morte, de sorte qu'une action de verrouillage est provoquée entre le support (4) et la liaison à course morte (3), et **en ce que** lesdits moyens de verrouillage sont conçus de sorte qu'après atteinte de ladite position complètement verrouillée, les composants de verrouillage demeurent stationnaires les uns par rapport aux autres pendant le pivotement plus avant du premier objet par rapport au second objet.

2. Dispositif de basculement selon la revendication 1, **caractérisé en ce que** le moyen (5) d'application de force est réalisé comme un dispositif de vérin qui comprend une tige (100, 200, 300) de piston et un corps de cylindre.

3. Dispositif de basculement selon la revendication 1 ou 2, **caractérisé en ce que** le support (4, 101) comprend un crochet (114) de verrouillage mobile en forme de J qui, dans la position verrouillée du dispositif de basculement, engage une saillie (108) de maintien agencée sur la liaison à course morte (3, 104).

4. Dispositif de basculement selon une ou plusieurs des revendications précédentes, **caractérisé en ce que** la tige (100) de piston comprend, à son extrémité, une came (110) de roulement qui, dans l'éventualité d'un mouvement de la tige (100) de piston dans la position verrouillée du dispositif de basculement, décale le crochet (114) de verrouillage, ce dont il résulte que l'action de verrouillage entre le support (4, 101) et la liaison à course morte (3, 104) peut être éliminée.

5. Dispositif de basculement selon la revendication 1 ou 2, **caractérisé en ce que** le support (4, 201) a sensiblement une forme de U et comprend un espace intérieur qui est délimité par deux pièces latérales sensiblement parallèles (208) et peut recevoir la liaison à course morte (3, 204).

6. Dispositif de basculement selon la revendication 5, **caractérisé en ce que** la liaison à course morte (3, 204) comprend au moins deux pièces (213) de bandes de type plaque sensiblement parallèles.

7. Dispositif de basculement selon la revendication 6, **caractérisé en ce que** les pièces (213) de bandes de la liaison à course morte (3, 204) peuvent s'approcher l'une de l'autre et s'écarter l'une de l'autre.

8. Dispositif de basculement selon une ou plusieurs des revendications précédentes, **caractérisé en ce que** la tige (200) de piston comprend, à son extrémité, une première pièce (219) de glissement qui peut interagir avec une seconde pièce (220) de glissement agencée sur la liaison à course perdue (3, 204), lesquelles pièces (219, 220) de glissement forment un moyen de réglage, lequel moyen de réglage peut décaler les pièces (213) de bandes de la liaison à course morte (3, 204).

9. Dispositif de basculement selon une ou plusieurs des revendications précédentes, **caractérisé en ce que** les pièces (219, 220) de glissement comprennent une face (221) de glissement, laquelle face (221) de glissement forme une inclinaison hélicoïdale.

10. Dispositif de basculement selon une ou plusieurs des revendications précédentes, **caractérisé en ce que** le support (4, 201) comprend des saillies (216) de verrouillage qui, dans la position verrouillée du dispositif de basculement, supportent les pièces (213) de bandes de la liaison à course morte (3, 204).

11. Dispositif d'inclinaison selon la revendication 1 ou 2, **caractérisé par** un élément (322) de maintien qui, dans la position verrouillée, s'étend à travers à la fois un trou (330) réalisé dans le support (4, 301) et un trou (333) réalisé dans la liaison à course morte (3, 304).

12. Dispositif de basculement selon la revendication 11, **caractérisé en ce que** l'élément (322) de maintien est agencé sur un coulisseau (315) de verrouillage qui peut être décalé par un mouvement de la tige (300) de piston, en résultat de quoi l'action de verrouillage entre le support (4, 301) et la liaison à course morte (3, 304) peut être provoquée ou éliminée.

13. Dispositif de basculement selon la revendication 12, **caractérisé en ce que** la tige (300) de piston est pourvue, à son extrémité, de surfaces (313) comportant des bords (134) qui peuvent interagir avec des saillies (320) qui sont agencées sur le coulisseau (315) de verrouillage.

14. Véhicule à châssis (2) et à cabine basculante (1), équipé d'un dispositif de basculement selon l'une quelconque des revendications précédentes, qui est couplé entre la cabine et le châssis.
